# EUROPEAN PATENT APPLICATION

(11) **EP 2 110 554 A1**
(43) Date of publication of application: **21.10.2009**
(21) Application number: 08425269.1
(22) Date of filing: 18.04.2008
(51) Int. Cl.: F03G 3/06, F03G 3/02, F03G 7/10

(54) **Gravity motor**

(71) Applicant: Mexon Laboratorio di Ricerca Tecnologica di Soncin Giancarlo, 27029 Vigevano (PV) (IT)
(72) Inventor: SoncinGiancardo, I-27029 Vigevano-Pavia (IT)
(74) Representative: Lotti, Giorgio

(57) **Abstract**

An energy generator (10) comprising a primary shaft (11) rotating around its own longitudinal axis (12) and at least two rod elements (14, 14') radially associated with the primary shaft (11) and having a concentrated mass (15, 15') associated with the free end of the rods (14, 14'), the at least two rod elements (14, 14') being cyclically rotationally moveable around the end associated with the primary shaft (11) between a raised position and a lowered position separated by an angle of less than 180°, the at least two rod elements (14, 14') during the upward run being free to rotate with respect to the primary shaft (11), and, during the descent, being integral with the primary shaft (11), there also being raising means (17) of the at least two rod elements (14, 14'), control means of the descent (18) of the at least two rod elements (14, 14'), and means for the switching on and off (19) of the energy generator (10).

## Description

### HIGH-EFFICIENCY ENERGY GENERATOR

The present invention relates to a high-efficiency energy generator.

There are currently numerous energy generators which however are characterized by various serious drawbacks.

A known and widespread example of these energy generators relates, for example, to thermo-electric generation systems.

The functioning of these machines consists in supplying thermal energy with water in the liquid state, with the purpose of transforming it to pressurized vapour and then expanding the vapour in a turbo-alternator for the development of the electric energy required.

The above phase passage from the liquid to the vapour phase normally takes place through combustion processes of fossil fuels, generally methane or coal.

These fuels are usually imported from producer countries in which there are reserves which, however, due to the constant increase in the request for energy, seem to be destined to becoming exhausted in more or less lengthy periods of time.

Furthermore, the cost of these fuels for purchasing countries is considerable, creating negative repercussions on the budgets of the paying countries.

Another disadvantage of these combustion processes consists in the introduction into the atmosphere of large quantities of carbon dioxide, a substance which is currently considered to be harmful for the environment.

Another process currently used for energy generation is nuclear fission which however is limited by the availability of fissile elements.

With respect to this energy generation process, it should also be taken into account that it disadvantageously produces active isotopes with a long half-life, called "radioactive waste", which must be safely stored even for long periods of time before losing their harm-fulness.

In order to solve these problems, i.e. environmental pollution and possible danger deriving from the waste, other energy generation processes defined as "clean" are at present extremely common.

One of these processes is hydro-electric energy generation or through wind power.

It should be noted however that these processes are also limited by the availability of water and wind respectively and it should also be taken into account that the machines necessary for effecting these processes often cause significant environmental changes.

The generation of energy by the conversion of solar energy into electricity, another "clean" process for energy generation, also requires large spaces for housing the relative generators and still suffers from considerable difficulties associated with the non-optimum conversion performance of the solar cells.

All the processes listed above, which represent the most important methods currently existing for the production of energy, consequently suffer from considerable disadvantages such as limited world resources of fossil fuels and fissile elements, dangerousness of the active waste, space, costs, etc.

An objective of the present invention is to provide a device capable of solving the above drawbacks of the known art in an extremely simple, economical and particularly functional manner.

A further objective is to provide a high-efficiency energy generator in which the presence of a particular type of "combustible" material is not necessary.

Another objective is to provide a generator and a method for the generation of energy capable of efficiently converting potential gravitational energy of falling masses, which is generally of little use, into a more exploitable form of energy.

Yet another objective is to provide a generator and a high-efficiency method for the generation of energy which does not produce any waste.

These objectives according to the present invention are achieved by providing a high-efficiency energy generator as specified in claim 1.

Further characteristics of the invention are indicated in the subsequent claims.

The characteristics and advantages of a high-efficiency generator according to the present invention will appear more evident from the following illustrative and non-limiting description, referring to the enclosed schematic drawings, in which:
figure 1 shows a side perspective view of a first preferred embodiment of a high-efficiency energy generator according to the present invention;
figure 2 shows a perspective view of another side of the high-efficiency energy generator of figure 1;
figure 3 shows a rear perspective view of the high-efficiency energy generator of figure 1; and
figure 4 schematically shows some functioning phases of another embodiment of a high-efficiency energy generator according to the present invention.

With reference to the figures, these show two different embodiments of a high-efficiency energy generator 10 according to the present invention.

Said energy generator 10 comprises a primary shaft 11 which rotates around its own longitudinal axis 12 which is substantially horizontally housed on a supporting structure 13.

This energy generator 10 also comprises at least two rod elements 14, 14' radially associated with the primary shaft 11, said rod elements 14, 14' have a concentrated mass 15, 15' associated with the free end of the rods themselves 14, 14'.

According to different preferred embodiments, these concentrated masses 15, 15' can be actual weights connected to the free ends of the rods 14, 14' or they can simply be end-portions of the same rods 14, 14', having dimensions and/or a specific weight greater than the rest of the relative rod 14, 14'.

In particular, according to the invention, the at least two rod elements 14, 14' are, when desired by the user, cyclically rotatingly moveable around their end associated with the primary shaft 11, between a raised position, or a higher dead point, and a lowered position, or lower dead point, wherein these positions are separated from each other by an angle of less than 180° with respect to the vertical line.

It should be pointed out that these raised and lowered positions are not necessarily at a common height for all the rods 14, 14' present on the same primary shaft 11.

According to the invention, the at least two rod elements 14, 14' are connected to the primary shaft 11 in such a way that during their upward run, or from the lowered position to the raised position, they are free to rotate with respect to the primary shaft 11, whereas during their descent, or from the raised position to the lowered position, they are integral and rigidly constrained to the primary shaft 11.

In particular therefore, during the descent of the rods 14, 14' which takes place naturally by gravity, they entrain and move the primary shaft 11 converting the potential gravitational energy of the falling masses 15, 15', which is of little use, into a more exploitable form of energy.

This selective coupling of the rods 14, 14' with the primary shaft 11, which derives from the rotation direction of the rods 14, 14' themselves with respect to the rotation of the primary shaft 11, is, according to a constructive embodiment, effected by means of a particular coupling geometry of said elements.

In particular, the above coupling of the rods 14, 14' with the primary shaft 11 can be a shaped coupling having teeth in a circle involute which grip and constrain the relative end of the rod 14, 14' onto the primary shaft 11 only in some kinematic/angular configurations.

As specified above, the descent of the rods 14, 14' takes place naturally by gravity whereas in order to bring the same rods 14, 14' back from the lowered position to the raised position, the energy generator 10 comprises raising means 17 acting on said at least two rod elements 14, 14'.

Once the rods 14, 14' have been returned to a raised position, they re-follow their descent spontaneously by gravity.

According to the invention, the energy generator 10 also comprises control means of the descent 18 of the at least two rod elements 14, 14' and switching on and off devices of the energy generator 10.

In particular, according to a preferred embodiment, there is the possibility of being able to stop the energy generator 10 at any moment, maintaining the rods 14, 14' in the configuration at the time of switching off, and there is also the possibility of being able to switch off the machine converging all the rods 14, 14' in the lower dead point thus allowing a user to act under safety conditions on the energy generator 10.

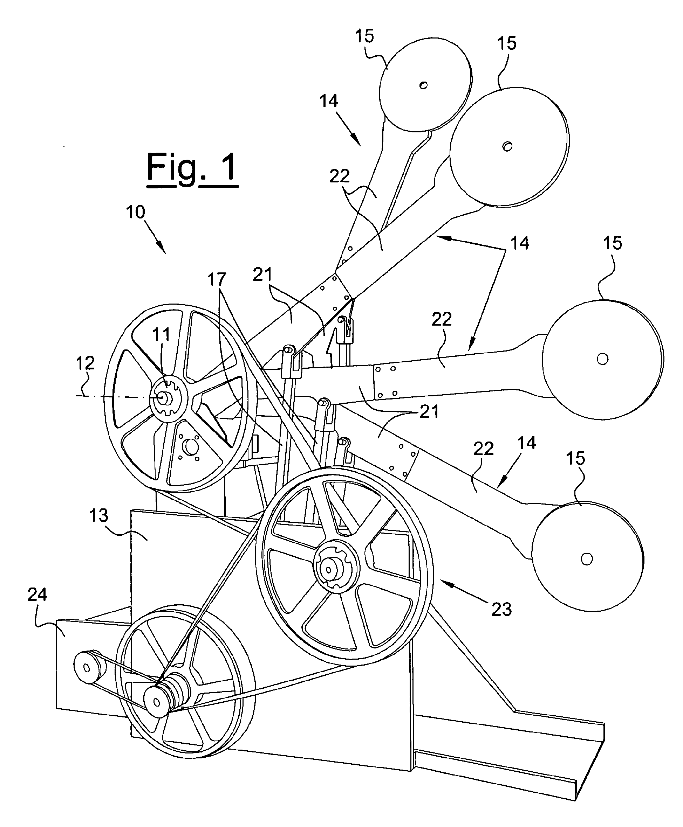

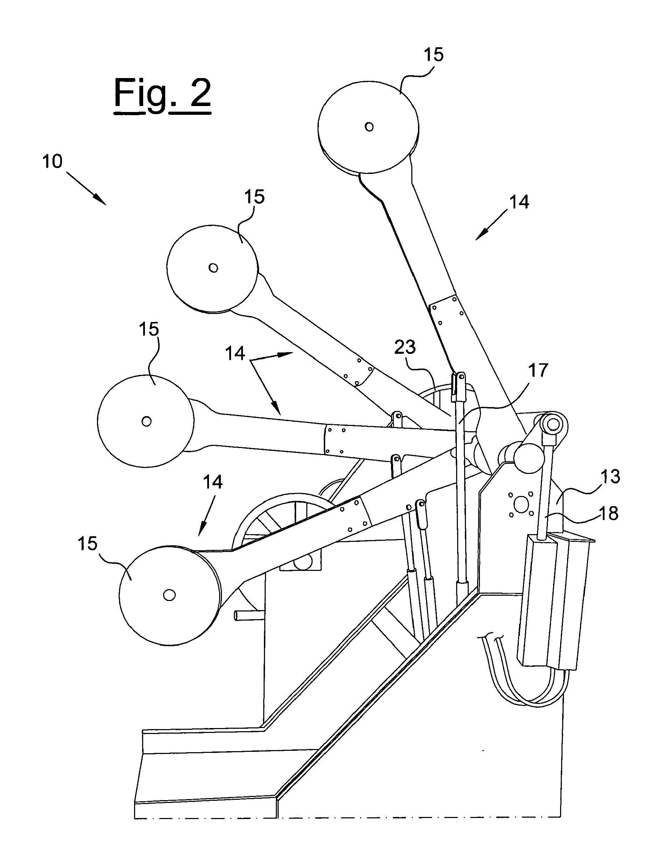

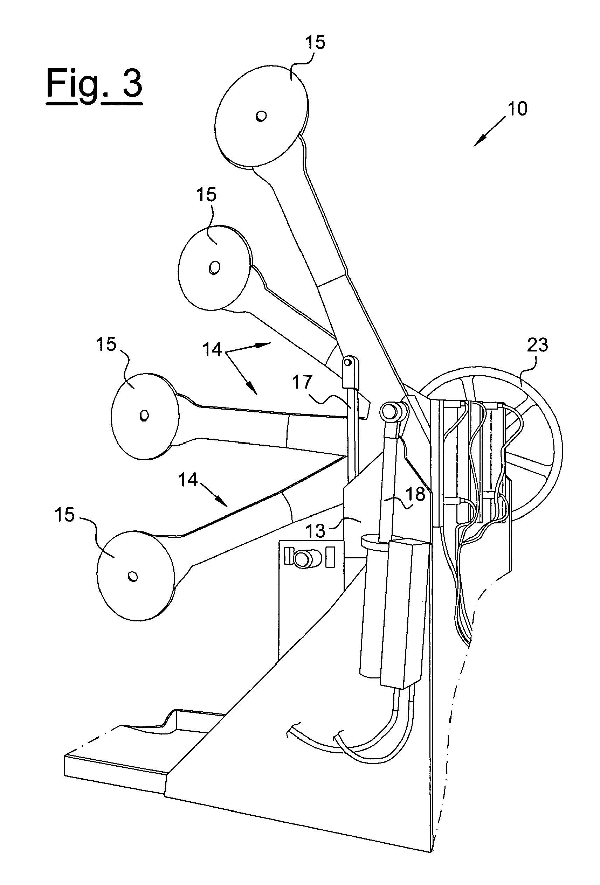

According to different embodiments, the rod elements 14, 14' can be a single piece or, as shown in figures 1-3, they can comprise a first and second portion 21, 22 which can be coupled with each other in series, for example by means of screws or bolts, wherein the first portion 21 is associated with the primary shaft 11 and the second portion is associated with the free end of the previous first portion 21.

As can be seen, the concentrated mass 15, 15' in this case is situated in correspondence with the free end of the second portion 22.

According to this embodiment in which the rod elements 14, 14' comprise a first and a second portion 21, 22, said second portion 22 can also be moveable with respect to the relative first portion 21 between an aligned position and a position substantially orthogonal to the first portion 21.

In this way, if the second portion 22 is in a position substantially orthogonal to the first portion 21, in particular during the upward run of the rod 14, 14', the power required by the raising means 17 for the upward rotation of the rods 14, 14' around the shaft 11 is advantageously less than that which would be required in the configuration with the second portion 22 aligned with the first portion 21.

According to a preferred embodiment, the generator 10 comprises at least two rod elements 14, 14' connected with each other to form at least one couple consisting of an upper rod element 14 and a lower rod element 14'.

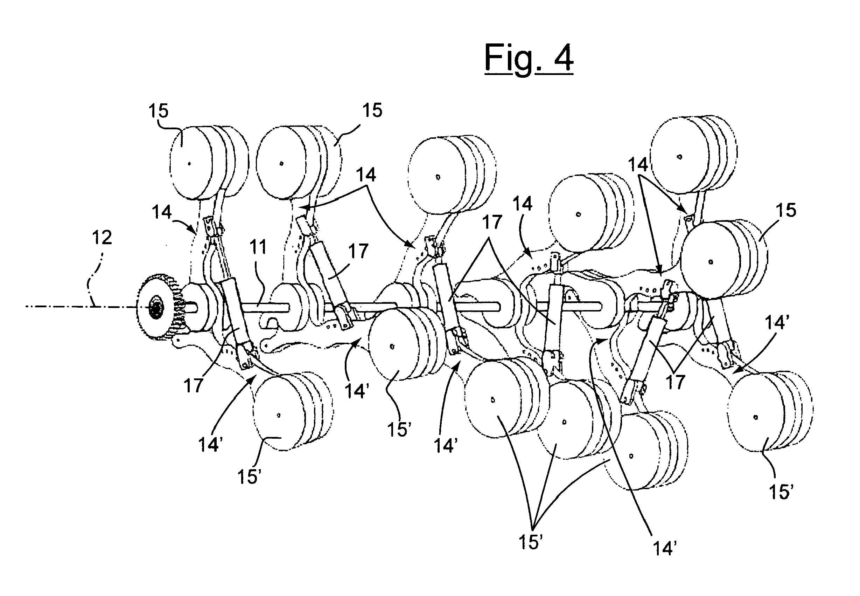

In particular, as can be seen in figure 4 which shows subsequent movement phases of said pair of rods 14, 14', in this embodiment each pair of rods 14, 14' is associated with the driving shaft 11 in a same point and the raising means 17 envisaged are at least a hydraulic cylinder 17 situated between the upper rod element 14 and the lower rod element 14'.

In particular, the at least one hydraulic cylinder 17 thus positioned and as described above, allows the rods 14, 14' forming the same couple, to effect relative rotations with respect to each other, in particular upwards, free downward integral rotations with respect to the shaft 11 and also to move a rod 14 as desired keeping the other rod 14' at a standstill.

According to another embodiment, shown in figure 1-3, the energy generator 10 according to the present invention comprises at least two rod elements 14, 14' which, unlike the previous embodiment where they had a common end, they are separate and arranged parallel along the development of the primary shaft 11.

According to this construction embodiment, the raising means 17 of the rods 14, 14' are at least two hydraulic cylinders 17 situated between the at least two rod elements 14, 14' and the supporting structure 13.

In this way, each hydraulic cylinder 17 lifts only one relative rod element 14, 14' from the lower dead point to the upper dead point.

As already specified, in both preferred embodiments described, the at least two rod elements 14, 14' present in the energy generator 10 during the downward phase from the upper dead point to the lower dead point, are integral with the shaft 11 which is therefore rotatingly entrained by the "fall" by gravity of the rods 14, 14'.

In order to exploit this rotating movement of the shaft 11 thus generated, according to requirements, the energy generator 10 can comprise transmission means 23 of said movement, said means 23 being associated on the one hand with the primary shaft 11 and on the other with a utilizing device 24, which can be an electric current generator or any other means according to the specific case.

In addition, in order to regulate the rotation rate which is established on the primary shaft 11 by the rods 14, 14', the energy generator 10 can comprise control means of the descent 18 of the latter, such as an oil-dynamic damper 18.

Finally, the presence is envisaged of a device for switching the energy generator 10 on and off, which can be common switches connected to a control board of the raising means 17 of the at least two rod elements 14, 14' and the control means of the descent 18 again of the at least two rod elements 14, 14'.

The functioning of the device, object of the invention, can be easily understood.

The energy generator 10 according to the present invention comprises a primary shaft 11 which can rotate around its own longitudinal axis 12, substantially horizontally housed on a supporting structure 13, and at least two rod elements 14, 14' radially associated with the primary shaft 11 having a concentrated mass 15, 15' associated with their free end.

In particular, according to the invention, said at least two rod elements 14, 14' are cyclically rotationally moveable around their end associated with the primary shaft 11 between a raised position, or upper dead position, and a lowered position, or lower dead point, wherein said positions are separated by an angle of less than 180°.

Said at least two rod elements 14, 14' are connected to the primary shaft 11 so that during the upward run, under the action of the raising means 17, they are free to rotate with respect to the primary shaft 11, whereas during the downward run, which takes place spontaneously by gravity, they are integral with the primary shaft 11 and entrain it in rotation.

In particular, the rods 14, 14' are associated with the shaft 11 in such a way that, when the generator 10 is switched on, they keep it in rotation with at least one rod constrained in the descent phase.

This condition can be easily reached by off-setting the descent order, and consequently that of the upward run, of the rods 14, 14'.

According to the first embodiment shown in figures 1-3, the energy generator 10 according to the present invention comprises four rod elements 14, 14' which are separate from each other and arranged parallel and offset along the development of the primary shaft 11.

As can be noted, in fact, said four rod elements 14, 14' are arranged in different angular positions so as to always have, in this case, three constraining rods in the falling phase and only one rod in the upward phase.

In this configuration, the energy generator 10 is extremely efficient in that, as only the energy necessary for lifting only one rod at a time is required, it is able to efficiently convert the potential gravitational energy of the falling masses 15, 15', which is of little use, into a more exploitable form of energy, i.e. the rotation of the shaft 11 entrained by the "natural" fall of the masses 15, 15' without requiring any external aid.

As already specified, this rotational movement of the shaft 11 thus generated can be used, by means of relative transmission means 23, by a utilizing device 24 which can be an electric current generator or any other form according to the cases.

According to the second preferred embodiment shown in figure 4, the generator 10 comprises at least two rod elements 14, 14' connected to each other and to the shaft 11 in a same point forming a pair consisting of an upper rod element 14 and a lower rod element 14'.

The above figure 4 shows a complete cycle of this pair of rods 14, 14' in which the lower rod 14' is initially raised, maintaining the upper rod 14 at a standstill in a raised position, subsequently rigidly blocking the two rods 14, 14' with each other and allowing them to "fall".

After the descent of the rods 14, 14' by gravity, acting contemporaneously on the common shaft 11 entraining it in their "natural" fall in rotation without the necessity of any external aid, the cycle envisages a phase in which the upper rod 14 is lifted by the thrust of the piston 17.

As in the previous case, the rotational movement of the shaft 11 thus generated can be used, by means of relative transmission means 23 by a utilizing device 24 which can be an electric current generator or any other form according to the cases.

Finally, it should be particularly observed how the utilizer 24 which exploits the rotational movement of the shaft 11 generated by the fall of the rods can be the same raising means 17 of the rods 14, 14' themselves, making the generator 10, after a start-up phase, completely autonomous and self-charged.

It can thus be seen that a high-efficiency energy generator according to the present invention achieves the purposes specified above.

The generator of the present invention does in fact allow energy to be generated with a high efficiency without requiring the presence of a particular type of "combustible" material, without producing any waste but exclusively efficiently converting the potential gravitational energy of the falling masses, which is of little use, into a more exploitable form of energy.

The high-efficiency energy generator of the present invention thus conceived can undergo numerous modifications and variants, all included in the same inventive concept; furthermore all the details can be substituted by technically equivalent elements. In practice, the material used as also the dimensions can vary according to technical requirements.

## Claims

1. An energy generator (10) comprising a primary shaft (11) rotational around its own longitudinal axis (12) and at least two rod elements (14, 14') radially associated with said primary shaft (11) and having a concentrated mass (15, 15') associated with the free end of said rods (14, 14'), said at least two rod elements (14, 14') being cyclically rotationally moveable around the end associated with said primary shaft (11) between a raised position and a lowered position separated by an angle of less than 180°, said at least two rod elements (14, 14') during the upward run, being free to rotate with respect to said primary shaft (11), and during the downward run, being integral with said primary shaft (11), there also being raising means (17) of said at least two rod elements (14, 14'), control means of the descent (18) of said at least two rod elements (14, 14') and means for the switching on and off of said energy generator (10).

2. The energy generator (10) according to claim 1, **characterized in that** said at least two rod elements (14, 14') comprise a first and a second portion (21, 22), wherein said first portion (21) is associated with said primary shaft (11) and said second portion is associated with the free end of said first portion (21), the free end of said second portion (22) comprising said concentrated mass (15, 15').

3. The energy generator (10) according to claim 2, **characterized in that** said second portion (22) is moveable with respect to said first portion (21) between a position aligned with said first portion (21) and a position substantially orthogonal to said first portion (21).

4. The energy generator (10) according to claim 1, **characterized in that** said at least two rod elements (14, 14') are connected with each other in pairs comprising an upper rod element (14) and a lower rod element (14').

5. The energy generator (10) according to claim 4, **characterized in that** said raising means (17) are at least one hydraulic cylinder (17) situated between said upper rod element (14) and said lower rod element (14').

6. The energy generator (10) according to claim 1, **characterized in that** said at least two rod elements (14, 14') are arranged separate from each other and parallel along the development of said primary shaft (11).

7. The energy generator (10) according to claim 6, **characterized in that** said raising means (17) are at least two hydraulic cylinders situated between said at least two rod elements (14, 14') and a supporting structure (13).

8. The energy generator (10) according to claim 1, **characterized in that** it comprises transmission means (23) of the movement associated on the one hand with said primary shaft (11) and on the other hand with a utilizing device (24).

9. The energy generator (10) according to claim 1, **characterized in that** said control means of the descent (18) of said at least two rod elements (14, 14') comprise at least one oil-dynamic damper (18) associated with said at least two rod elements (14, 14').

10. The energy generator (10) according to claim 1, **characterized in that** said switching on and off means comprise switches connected to a control board of said raising means (17) of said at least two rod elements (14, 14') and of said control means of the descent (18) of said at least two rod elements (14, 14').
